# FASCICULE DE BREVET EUROPEEN

(11) **EP 1 221 864 B1**
(45) Date de publication et mention de la délivrance du brevet: **03.05.2006**
(21) Numéro de dépôt: 00967953.1
(22) Date de dépôt: 05.10.2000
(51) Int. Cl.: A23G 9/32, A23G 9/14, A23G 9/26, A23G 9/22, A23G 9/24

(54) **PROCEDE DE FABRICATION D'UN PRODUIT ALIMENTAIRE GLACE TEL QU'UNE SUCETTE**
VERFAHREN ZUM HERSTELLEN VON GEFRORENEN LEBENSMITTELN WIE EIN LUTSCH-EIS
METHOD FOR PRODUCING AN ICED FOOD PRODUCT SUCH AS AN ICED LOLLIPOP

(30) Priorité: 08.10.1999 FR 9912560
(43) Date de publication de la demande: 17.07.2002
(73) Titulaire: Masterfoods, 45550 Saint-Denis-de-l'Hôtel (FR)
(72) Inventeur: GLADIN, Alain, F-67500 Haguenau (FR); PICQUET, Alain, F-67200 Strasbourg (FR)
(74) Mandataire: Hirsch & Associés
(86) Numéro de dépôt international: PCT/FR2000/002767
(87) Numéro de publication internationale: WO 2001/026477

(56) Documents cités:
- EP-A- 0 864 256
- US-A- 4 081 257
- US-A- 4 700 547
- US-A- 5 358 727
- US-A- 5 382 149

## Description

L'invention concerne les produits alimentaires glacés, notamment sucrés, tels que les sucettes à base de sorbet et/ou de crème glacée.

On connaît du document EF-0 864 256 un procédé de fabrication d'une sucette glacée dans lequel on refroidit un moule à -100°C et on remplit le moule avec une solution aqueuse destinée à former une portion de la sucette. Le durcissement de cette solution au contact du moule froid forme une croûte dure. On aspire ensuite la fraction centrale non durcie de la solution, puis on remplit la partie résiduelle du moule avec une composition de crème glacée qu'on laisse durcir intégralement toujours à -100°C. On démoule enfin la sucette en vue de son emballage et de son stockage.

Ce procédé a pour avantage qu'il permet d'obtenir une sucette ayant une forme extérieure très précisément définie et pouvant par exemple présenter des reliefs tels que des formes de fruit. De plus, ce procédé ne met pas en oeuvre un réchauffage de la sucette en vue du démoulage. Toutefois, ce procédé a pour principal inconvénient que la température du moule à -100°C implique une température très basse dans l'environnement de la chaîne de fabrication. Sachant que des opérateurs doivent pouvoir intervenir à tout moment sur cette chaîne, il s'ensuit des conditions de travail très difficiles à supporter. De plus, les moyens à mettre en oeuvre pour maintenir une température aussi basse exigent des investissements très lourds qui accroissent le coût du produit.

On connaît aussi du document US-A 2,120,640 le fait d'appliquer une substance ou un mélange à l'intérieur d'un récipient ou d'un moule pour faciliter l'extraction du produit glacé du fait que la substance ou le mélange n'est pas congelé. Il propose notamment un mélange de sucres, d'eau et de glycérol.

Un but de l'invention est de fournir un procédé de fabrication permettant d'obtenir des produits dont la forme est très précisément définie et pouvant être mis en oeuvre dans un environnement de travail à température plus acceptable.

En vue de la réalisation de ce but, on prévoit selon l'invention un procédé de réalisation d'un produit alimentaire glacé, comprenant les étapes consistant à déposer sur une face interne d'un moule un mélange constitué d'eau et un polyol, et disposer dans le moule en contact avec le mélange une substance formant le produit alimentaire.

Ainsi, le mélange constitue un agent de démoulage qui permet de démouler le produit à des températures très basses, par exemple inférieures à -10°C, voire -15°C. Le démoulage à une telle température n'amorce pas la fonte du produit en surface. On obtient donc un produit ayant une forme très précisément définie et pouvant notamment présenter des dessins en relief ou en creux d'une très grande précision. De plus, le mélange permet de fabriquer le produit à des températures raisonnables et compatibles avec les conditions habituellement rencontrées sur les chaînes de froid. Il n'altère ni le goût ni l'aspect du produit. Il évite de soumettre le produit à un réchauffage important générant un choc thermique. Ces avantages tiennent notamment à la viscosité élevée du mélange par comparaison à celle de l'eau et à son point de fusion relativement bas par rapport à celui de l'eau.

Avantageusement, le mélange comprend entre 0,8 x et 1,2 x de pourcentage en masse du polyol où x est le pourcentage en masse du polyol dans le mélange eutectique.

Le point de fusion particulièrement bas d'un tel mélange voisin de l'eutectique rend ce dernier spécialement apte à servir d'agent de démoulage.

Avantageusement, le mélange est un mélange eutectique.

Avantageusement, le polyol est choisi parmi le groupe constitué par : le glycérol, le maltitol et le sorbitol.

Le glycérol, peu coûteux, est particulièrement préféré.

Avantageusement, le mélange est un mélange eutectique d'eau et de glycérol.

Avantageusement, on donne au produit une température de démoulage telle que, lors d'un démoulage du produit, le mélange est au moins en partie liquide et la substance est entièrement solide.

Avantageusement, la température de démoulage est inférieure à 0°C, et de préférence inférieure à -5°C.

Avantageusement, la température de démoulage est inférieure à -10°C, et de préférence inférieure à -15°C.

Avantageusement, on réalise au moins une partie du produit à une température de réalisation inférieure à la température de démoulage.

Avantageusement, la température de réalisation est inférieure à -15 °C et de préférence inférieure à -25°C.

Avantageusement, le mélange est déposé par pulvérisation.

On prévoit aussi selon l'invention un produit ayant été fabriqué au moyen du procédé selon l'invention.

On prévoit encore selon l'invention une installation pour la réalisation d'un produit alimentaire glacé, comprenant des moyens pour déposer sur une face interne d'un moule un mélange comprenant de l'eau et un polyol, et des moyens pour disposer dans le moule, en contact avec le mélange, une substance formant le produit alimentaire.

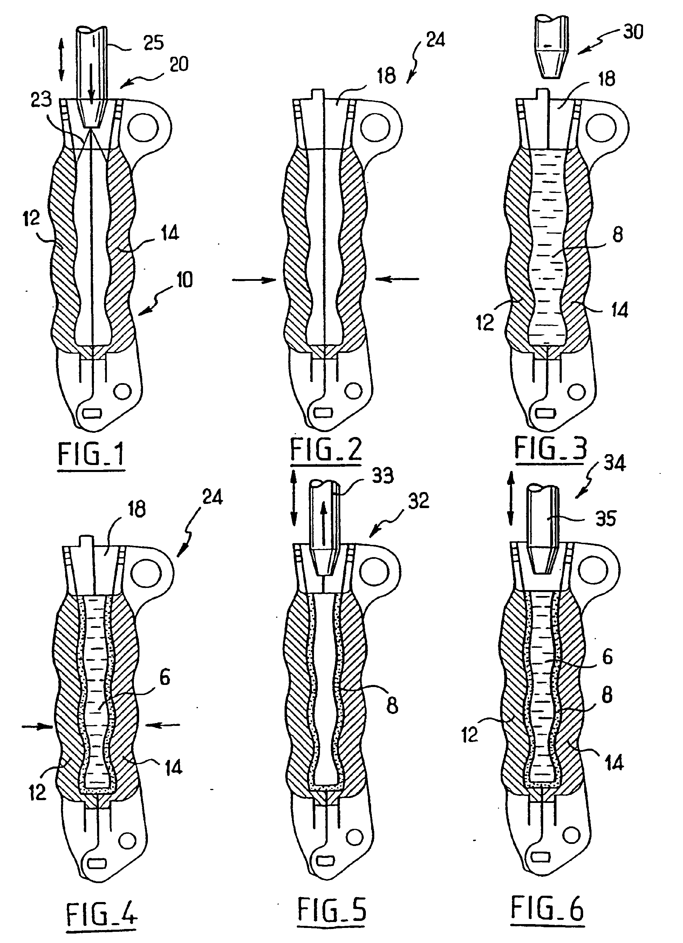

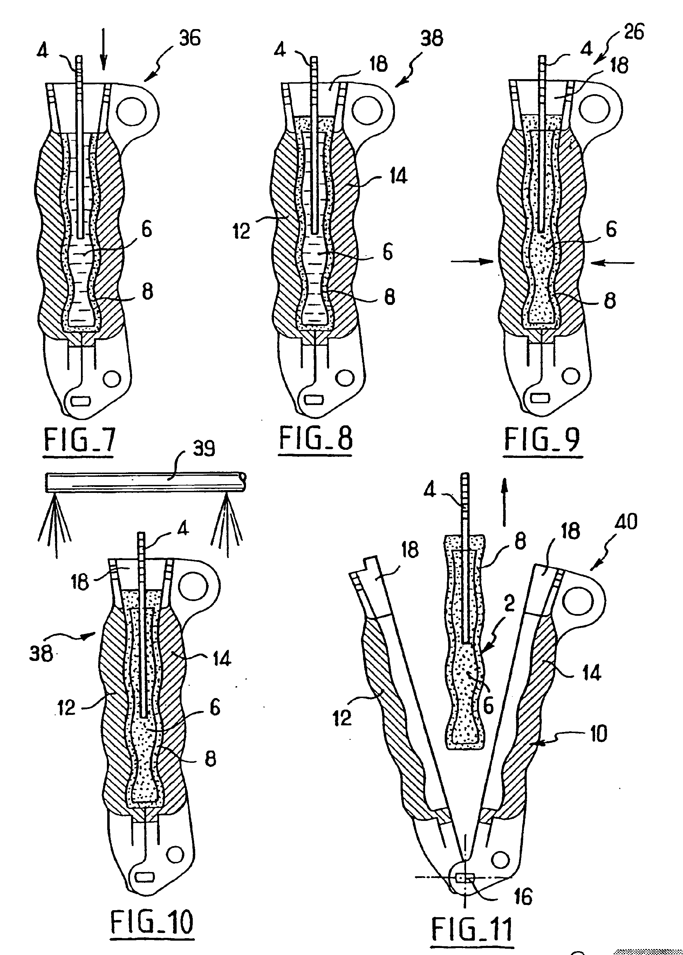

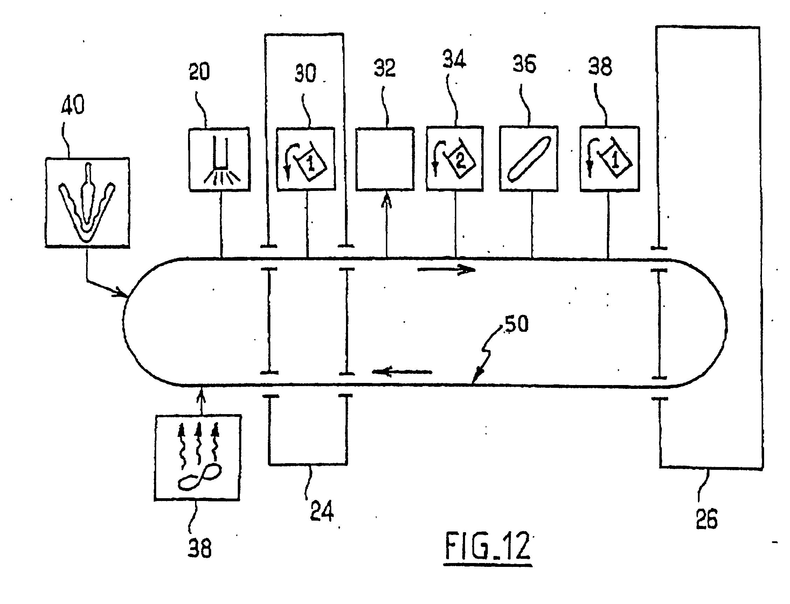

D'autres caractéristiques et avantages de l'invention apparaîtront encore dans la description suivante d'un mode préféré de réalisation donné à titre d'exemple non limitatif. Aux dessins annexés :
- les figures 1 à 11 illustrent différentes étapes du procédé dans le présent exemple de mise en oeuvre ; et
- la figure 12 est une vue schématique d'une installation selon l'invention.
   Dans le présent exemple de mise en oeuvre, on fabrique au moyen du procédé une sucette glacée 2 à base de sorbet aux fruits sur bâtonnet 4. En référence à la figure 11, la sucette 2 comporte en son centre un sorbet foisonné 6, avec une texture moelleuse dans lequel des morceaux de fruits sont incorporés. Elle comporte en outre un sorbet d'enrobage non foisonné 8, plus dur que le sorbet central 6 qu'il recouvre intégralement. Ces deux sorbets 6, 8 avec le bâtonnet 4 constituent la sucette.
   On appelle ici sorbet une substance obtenue par congélation d'un mélange d'eau et de sucre, aromatisé à l'aide de fruits frais ou leur équivalent en fruits congelés, atomisés, lyophilisés, ou de jus de fruits. La sucette peut par exemple exister en parfums fruits tropicaux, fraise ou orange/citron. Le sorbet d'enrobage 8 est stabilisé au moyen de polysaccharides et a un taux de matière sèche de 20 à 25%.
   Dans le présent mode de mise en oeuvre, on utilise l'installation illustrée à la figure 12. Cette installation comprend des moules métalliques 10 illustrés aux figures 1 à 11 et comprenant en surface une couche d'aluminium déposée par voie électrochimique (aluminium anodisé), ce qui donne au moule un bon état de surface. Chaque moule 10 a une forme complexe, généralement allongée rectiligne, plus haut que large, et plus large qu'épais. Le moule présente deux faces internes principales présentant des cavités représentant par exemple des fraises, cassis, oranges ou autres fruits destinées à générer des reliefs correspondants sur la sucette 2. Ces cavités donnent au moule une très grande surface interne par rapport à son volume. Cette grande surface augmente la superficie du contact entre le moule 10 et la sucette 2 et, en d'autres circonstances, pourrait s'avérer critique lors du démoulage, en ce sens que des portions de la sucette pourraient demeurer fixées au moule. Le procédé selon l'invention évite cette difficulté.
   En référence à la figure 11, le moule 10 comprend deux demi-moules 12, 14 définissant chacun une grande face de la sucette. Ces deux parties viennent en contact suivant un plan de joint vertical s'étendant sensiblement suivant l'épaisseur de la sucette 2. Les deux demi-moules 12, 14 sont montés à pivotement l'un par rapport à l'autre autour d'un axe inférieur horizontal 16, situé à une extrémité inférieure du moule opposée à l'extrémité supérieure de remplissage 18 adjacente au bâtonnet. Le moule a ici une hauteur de 104 mm, une largeur de 48 mm et une épaisseur de 20 mm. L'extrémité supérieure 18, ou jupe, a en section verticale une forme trapézoïdale se rétrécissant vers le bas, et en section horizontale une forme rectangulaire. Cette extrémité 18 permet de palier les fluctuations des dosages, et des volumes lors de la cristallisation des sorbets.

L'installation comprend un convoyeur 50 qui déplace les moules 10 suivant une course ovale fermée illustrée à la figure 12.

L'installation comporte deux tunnels de refroidissement 24, 26, chacun refroidis par un ventilateur interne d'air froid. Le tunnel 24 est traversé par les moules 10 sur les deux portions rectilignes de leur course. Le tunnel 26 est traversé par les moules durant l'une des deux parties courbes de leur course, entre l'aller et le retour.

Dans le trajet aller, en partie supérieure de la figure 12, le tunnel 24 donne une température froide au moule avant et pendant les dosages. Au retour, il maintient le moule et le produit à température. Le tunnel 26 maintient le produit en température pendant la portion courbe de la course. La température régnant dans le premier tunnel 24 est ici de -27°C et celle du deuxième tunnel de -31°C.

On va maintenant décrire chacun des postes de l'installation en suivant la fabrication de chaque sucette.

En référence à la figure 1, au poste 20 précédant l'entrée dans le tunnel 24 et situé sur le trajet aller, on pulvérise l'intérieur du moule vide 10 avec une solution d'eau et de glycérol 23 au moyen d'une buse 25, par exemple au moyen d'une buse 25 vendue sous le nom « DÜBÖR ».

Les polyols mélangés à l'eau ont la propriété de présenter un point eutectique pour une composition de mélange donnée. Dans certains mélanges binaires, les interactions entre les molécules provoquent une diminution du point de fusion qui devient très inférieur à celui des composés pris séparément. Pour une certaine composition de mélange, on obtient le point de fusion minimum. Ce point particulier est appelé point eutectique ou mélange eutectique. Pour les polyols, ces interactions sont dues aux liaisons hydrogènes qui se créent entre les fonctions alcool et eau. La solution a ici les proportions du mélange eutectique (mais pourrait avoir des proportions voisines de ce mélange). Pour le glycérol, les proportions du mélange eutectique sont, en masse, 66,7% de glycérol et 33,3% d'eau. Avec un tel mélange, on peut effectuer le démoulage de la sucette 2, sans réchauffage, à une température de moule de -39°C ou plus. Toutefois, comme on le verra plus loin, le présent mode de mise en oeuvre comprend une étape de réchauffage et réalise le démoulage à une température plus élevée afin de réduire la quantité de mélange injectée dans chaque moule. En variante, le mélange pourra comprendre jusqu'à 75% de glycérol (ce qui permet de démouler sans réchauffage jusqu'à -34°C) ou jusqu'à 55% de glycérol (ce qui autorise un démoulage sans réchauffage jusqu'à -22°C).

Les polyols purs ont des viscosités très importantes par rapport à l'eau (le rapport des viscosités est supérieur à 1 000). Ce rapport reste d'environ 20 pour les mélanges eutectiques. Du fait de cette viscosité, le mélange ainsi pulvérisé s'écoule très modérément par gravité dans le moule 10 à la température de mise en oeuvre du procédé qui, à ce stade, est inférieure à -10°C. De la sorte, les faces internes du moule sont convenablement recouvertes par ce mélange jusqu'à mise -en place du sorbet d'enrobage 8. La solution de glycérol peut être introduite en excès dans le moule sans nuire au démoulage. Lorsque chaque moule 10 est utilisé plusieurs fois de suite, on constate que la quantité de solution à pulvériser à chaque tour peut être inférieure à 2 g et par exemple égale à 1 g.

En référence à la figure 2, le moule entre ensuite dans le tunnel 24 où il est refroidi à -27°C.

Puis le premier sorbet 8, ou sorbet d'enrobage, stocké à +3°C avant dosage, est introduit dans le moule 10 à l'état liquide, comme illustré à la figure 3. Ce dosage a lieu dans le tunnel 24 au poste de dosage 30. A ce poste, le moule est rempli du premier sorbet liquide 8 jusqu'au bord inférieur de la jupe 18.

En référence à la figure 4, ce sorbet 8 vient en contact avec la fine pellicule de solution de glycérol recouvrant toute la face interne du moule. Compte tenu de la température du moule 10, le sorbet 6 se solidifie au voisinage des parois du moule et forme une coquille solide recouvrant ces parois intérieurement, le centre du contenu du moule demeurant liquide, comme illustré à la figure 4.

En référence à la figure 5, le moule sort ensuite du tunnel 24 et passe en regard d'un poste 32 où le coeur liquide du contenu du moule est aspiré par une pompe à vide 33, ne laissant dans le moule que la coquille durcie.

En référence à la figure 6, le moule passe ensuite en regard du poste 34 de dosage du deuxième sorbet 6 ou sorbet interne. Le moule est alors rempli jusqu'au bord inférieur de la jupe 18. Le dosage a lieu au moyen d'une buse 35 qui pénètre dans le moule jusqu'au voisinage immédiat du fond inférieur, par exemple à 5 mm de celui-ci, et libère le sorbet en remontant jusqu'à sa sortie du moule.

En référence à la figure 7, le moule passe ensuite en regard d'un poste 36 d'introduction d'un bâtonnet 4 mis en place dans le sorbet central 6 à travers la jupe 18.

Comme illustré à la figure 8, on introduit ensuite à nouveau dans le moule 10 une petite quantité du premier liquide 8 au poste 38 afin de remplir partiellement la jupe 18 et enfermer le sorbet central 6 dans le sorbet externe 8.

Les moules traversent ensuite le deuxième tunnel 26 où ils sont refroidis à -31°C, puis parcourent le trajet séparant les deux tunnels puis à nouveau au retour le tunnel 24 pour recevoir des frigories, comme illustré à la figure 9. A la sortie du tunnel 24, le sorbet central est lui aussi entièrement cristallisé.

Au sortir du deuxième tunnel 26, les moules 10 passent en regard d'un poste de réchauffage 38, comme illustré à la figure 10, comprenant des turbines 39 qui soufflent de l'air chaud sur les moules 10 pour que, par exemple, lors de l'ouverture ultérieure du moule, sa température à sa surface externe soit de -19°C et que la sucette soit à -26°C au centre. Ces conditions de réchauffage ne génèrent aucune fonte de la sucette en surface, préservant ainsi la définition des reliefs qu'elle présente. Lors du démoulage, au moins une fraction du mélange au glycérol est liquide mais les deux sorbets demeurent intégralement solides.

Ensuite, les moules 10 passent au poste 40, illustré à la figure 11, où le moule est ouvert et la sucette 2 extraite du moule par un dispositif préhenseur adapté connu en soi.

Le moule vide passe ensuite à nouveau devant le poste de pulvérisation 20 pour la fabrication d'une autre sucette.

Le procédé selon l'invention permet d'éviter de provoquer un choc thermique préalablement au démoulage et/ou durant celui-ci. Ne nécessitant pas un réchauffage par eau pour l'apport d'une grande quantité de calories, il permet d'éliminer les risques de projections d'eau sur le produit, ce qui réduit la formation ultérieure de givre.

De plus, l'envoi d'une grande quantité d'eau sur l'extérieur des moules aux fins de réchauffage pose habituellement des problèmes d'hygiène et crée un environnement froid et humide difficile à supporter pour les opérateurs.

Les températures associées au procédé (voisines de -30°C et voire supérieures à -30°C), permettent sa mise en oeuvre industrielle dans des conditions de travail habituelles sur les chaînes de froid alimentaires.

Le procédé selon l'invention permet d'effectuer le démoulage à des températures de moule situées par exemple entre -30°C et -10°C. Il permet de former des sucettes présentant des dessins en relief ou en creux définis avec une très grande précision.

Lors de l'introduction du sorbet d'enrobage 8 dans le moule, une partie du mélange de démoulage 23 se mêle souvent au sorbet d'enrobage 8. Toutefois, une fraction importante de la partie non mêlée de mélange de démoulage 23 demeure liquide et assure ainsi le démoulage.

Le procédé selon l'invention ne génère pas d'amalgame de mélange de glycérol 23 sur la sucette ) après démoulage. Il arrive seulement que celle-ci présente extérieurement quelques traces du mélange 23 ne modifiant pas l'aspect du sorbet d'enrobage. La solution de glycérol 23 ne modifie pas le goût du sorbet d'enrobage 8 même si une fraction de cette solution se mêle au sorbet durant la fabrication.

La température très basse du produit 2 à l'issue de la fabrication le rend très dur et limite sa déformation lors des phases ultérieures de conditionnement, de stockage et de transport.

Le procédé selon l'invention limite la formation de cristaux de glace sur le produit durant ses différentes manipulations et jusqu'à consommation finale par l'acheteur, ce qui préserve l'aspect du produit.

On pourra remplacer le glycérol par un autre polyol tel que le sorbitol ou le maltitol. Ainsi, une solution aqueuse de sorbitol, dans laquelle ce dernier forme 70% de la masse de la solution, permet un démoulage sans réchauffage sur une plage de température ayant pour limite inférieure -41°C. Avec le maltitol dosé à 75% en solution, cette limite est de -35°C.

On pourra mettre en oeuvre le procédé au moyen de la solution de glycérol à une température de -30°C et sans réchauffer le moule avant démoulage, par exemple en augmentant la quantité de solution pulvérisée.

Le procédé selon l'invention pourra servir à fabriquer des produits glacés, notamment sucrés à base de sorbet et/ou de crème glacée.

## Revendications

1. Procédé de réalisation d'un produit alimentaire glacé (2), **caractérisé en ce qu'**il comprend les étapes consistant à :
- déposer (20) sur une face interne d'un moule (10) un mélange (23) constitué d'eau et un polyol ; et
- disposer dans le moule en contact avec le mélange une substance (8) formant le produit alimentaire.

2. Procédé selon la revendication 1, **caractérisé en ce que** le mélange comprend entre 0,8 x et 1,2 x de pourcentage en masse du polyol où x est le pourcentage en masse du polyol dans le mélange eutectique.

3. Procédé selon la revendication 1 on 2, **caractérisé en ce que** le mélange (23) est un mélange eutectique.

4. Procédé selon l'une quelconque des revendications 1 à 3, **caractérisé en ce que** la polyol est choisi parmi le groupe constitué par : le glycérol, le maltitol et le sorbitol.

5. Procédé selon l'une quelconque des revendications 1 à 4, **caractérisé en ce que** le mélange est un mélange eutectique d'eau et de glycérol.

6. Procédé selon l'une quelconque des revendications 1 à 5, **caractérisé en ce qu'**on donne au produit une température de démoulage telle que, lors d'un démoulage du produit, le mélange est au moins en partie liquide et la substance (8) est entièrement solide.

7. Procédé selon la revendication 6, **caractérisé en ce que** la température de démoulage est inférieure à 0°C, et de préférence inférieure à -5°C.

8. Procédé selon la revendication 6, **caractérisé en ce que** la température de démoulage est inférieure à -10°C, et de préférence inférieure à -15°C.

9. Procédé selon l'une quelconque des revendications 6 à 8, **caractérisé en ce qu'**on solidifie avant démoulage au moins une partie du produit à une température de réalisation inférieure à la température de démoulage.

10. Procédé selon la revendication 9, **caractérisé en ce que** la température de réalisation est inférieure à -15 °C et de préférence inférieure à -25°C.

11. Procédé selon l'une quelconque des revendications 1 à 10, **caractérisé en ce que** le mélange (23) est déposé par pulvérisation.

12. Procédé selon l'une quelconque des revendications 1 à 11, **caractérisé en ce qu'**on dispose la substance (8) à l'état liquide dans le moule (10).

13. Procédé selon l'une quelconque des revendications 1 à 12, **caractérisé en ce que** le moule (10) comprend deux parties de moule (12, 14) mobiles l'une par rapport à l'autre et définissant chacune la face interne.

14. Procédé selon la revendication 13, **caractérisé en ce que** les deux parties de moule (12, 14) sont mobiles en rotation l'une par rapport à l'autre.

15. Procédé selon la revendication 14, **caractérisé en ce que** les deux parties de moule (12, 14) sont articulées l'une à l'autre.

16. Procédé selon la revendication 14 ou 15, **caractérisé en ce que** les deux parties du moule (12,14) sont mobiles autour d'un axe de rotation horizontal (16).

## Patentansprüche

1. Verfahren zum Herstellen eines gefrorenen Lebensmittelprodukts (2), **dadurch gekennzeichnet, daß**
- ein Gemisch (23) auf eine Innenseite einer Form (10) aufgebracht wird, welches Gemisch aus Wasser und Polyol gebildet ist; und
- eine Substanz (8), die das Lebensmittelprodukt bildet, in die Form in Kontakt mit dem Gemisch gebracht wird.

2. Verfahren nach Anspruch 1, **dadurch gekennzeichnet, daß** das Gemisch zwischen 0,8 x und 1,2 x Masseprozent Polyol umfaßt, wobei x das Massenprozent von Polyol in dem eutektischen Gemisch ist.

3. Verfahren nach Anspruch 1 oder 2, **dadurch gekennzeichnet, daß** das Gemisch (23) ein eutektisches Gemisch ist.

4. Verfahren nach einem der Ansprüche 1 bis 3, **dadurch gekennzeichnet, daß** das Polyol aus einer Gruppe gewählt ist, die durch Glycerol, Maltitol und Sobit gebildet ist.

5. Verfahren nach einem der Ansprüche 1 bis 4, **dadurch gekennzeichnet, daß** das Gemisch ein eutektisches Gemisch aus Wasser und Glycerol ist.

6. Verfahren nach einem der Ansprüche 1 bis 5, **dadurch gekennzeichnet, daß** das Produkt auf eine Ausformtemperatur erwärmt wird, so daß beim Entfernen der Form von dem Produkt das Gemisch zumindest teilweise flüssig und die Substanz (8) vollständig fest ist.

7. Verfahren nach Anspruch 6, **dadurch gekennzeichnet, daß** die Ausformtemperatur unter 0°C, vorzugsweise unter -5°C, liegt.

8. Verfahren nach Anspruch 6, **dadurch gekennzeichnet, daß** die Ausformtemperatur unter -10°C, vorzugsweise unter -15°C, liegt.

9. Verfahren nach einem der Ansprüche 6 bis 8, **dadurch gekennzeichnet, daß** vor dem Ausformen wenigstens ein Teil des Produkts bei einer Herstellungstemperatur verfestigt wird, die unterhalb der Ausformtemperatur liegt.

10. Verfahren nach Anspruch 9, **dadurch gekennzeichnet, daß** die Herstelltemperatur unter -15°C, vorzugsweise unter -25°C, liegt.

11. Verfahren nach einem der Ansprüche 1 bis 10, **dadurch gekennzeichnet, daß** das Gemisch (23) mittels Pulverisierung oder Zerstäubung aufgebracht wird.

12. Verfahren nach einem der Ansprüche 1 bis 11, **dadurch gekennzeichnet, daß** die Substanz (8) in flüssigem Zustand in die Form (10) eingebracht wird.

13. Verfahren nach einem der Ansprüche 1 bis 12, **dadurch gekennzeichnet, daß** die Form (10) zwei Formteile (12, 14) umfaßt, die zueinander beweglich sind und jeweils die Innenseite definieren.

14. Verfahren nach Anspruch 13, **dadurch gekennzeichnet, daß** die Formteile (12, 14) zueinander drehbeweglich sind.

15. Verfahren nach Anspruch 14, **dadurch gekennzeichnet, daß** die beiden Formteile (12, 14) aneinander angelenkt sind.

16. Verfahren nach Anspruch 14 oder 15, **dadurch gekennzeichnet, daß** die beiden Formteile (12, 14) um eine horizontale Drehachse beweglich sind.

## Claims

1. A method of producing an iced food product (2), **characterized in that** it comprises the steps consisting in:
- depositing (20), on an inner face of a mold (10), a mixture (23) constituted of water and a polyol; and
- placing a substance (8) forming the food product in contact with the mixture in the mold.

2. The method as claimed in claim 1, **characterized in that** the mixture comprises a mass percentage of between 0.8 x and 1.2 x of the polyol where x is the mass percentage of the polyol in the eutectic mixture.

3. The method as claimed in claim 1 or 2, **characterized in that** the mixture (23) is a eutectic mixture.

4. The method as claimed in any one of claims 1 to 3, **characterized in that** the polyol is chosen from the group consisting of: glycerol, maltitol and sorbitol.

5. The method as claimed in any one of claims 1 to 4, **characterized in that** the mixture is a eutectic mixture of water and of glycerol.

6. The method as claimed in any one of claims 1 to 5, **characterized in that** the product is given a demolding temperature such that, when the product is being demolded, the mixture is at least partly liquid and the substance (8) is completely solid.

7. The method as claimed in claim 6, **characterized in that** the demolding temperature is less than 0°C, and preferably less than -5°C.

8. The method as claimed in claim 6, **characterized in that** the demolding temperature is less than -10°C, and preferably less than -15°C.

9. The method as claimed in any one of claims 6 to 8, **characterized in that** before demolding at least part of the product is solidified at a production temperature less than the demolding temperature.

10. The method as claimed in claim 9, **characterized in that** the production temperature is less than -15°C and preferably less than -25°C.

11. The method as claimed in any one of claims 1 to 10, **characterized in that** the mixture (23) is deposited by spraying.

12. The method as claimed in any one of claims 1 to 11, **characterized in that** the substance (8) is placed in the mold (10) in the liquid state.

13. The method according to any one of claims 1 to 12, **characterised in that** the mold (10) comprises two mold parts (12, 14) movable with respect to each other and each defining the inner face.

14. The method according to claim 13, **characterized in that** the two mold parts (12, 14) are movable in rotation with respect to each other.

15. The method according to claim 14, **characterized in that** the two mold parts (12, 14) are hinged one on the other.

16. The method according to one of claims 14 or 15, **characterised in that** the two mold parts (12, 14) are movable about a horizontal axis of rotation (16).
